# EUROPÄISCHE PATENTANMELDUNG

(11) **EP 1 167 921 A1**
(43) Veröffentlichungstag der Anmeldung: **02.01.2002**
(21) Anmeldenummer: 01114194.2
(22) Anmeldetag: 12.06.2001
(51) Int. Cl.: G01C 9/32

(54) **Nivellierinstrument**

(30) Priorität: 29.06.2000 DE 20011458 U
(71) Anmelder: Reca Norm GmbH & Co. KG, 74635 Kupferzell (DE)
(72) Erfinder: Thyrassa, Holger, 74635 Kupferzell (DE)
(74) Vertreter: Patentanwälte Ruff, Wilhelm, Beier, Dauster & Partner

(57) **Zusammenfassung**

Bei einem Nivellierinstrument, insbesondere einer Wasserwaage, mit einem Waagekörper 12, der mindestens eine Libelle 15, 16 aufweist, die in mindestens einem Libellenkörper 13, 14 des Waagekörpers 12 festgelegt ist, ist mindestens ein Beleuchtungsmittel 17, 18 zur Beleuchtung der mindestens einen Libelle vorgesehen. Der Libellenkörper 13, 14 weist mindestens eine Ausnehmung 36 zum Einfangen des von einem Beleuchtungsmittel 17, 18 abgestrahlten Lichts auf, die im wesentlichen unmittelbar an der Libelle 15, 16 angeordnet ist, wodurch die Libelle 15, 16 durch das Beleuchtungsmittel 17, 18 abgestrahlte Licht durchleuchtbar ist.

## Beschreibung

Die Erfindung betrifft ein Nivellierinstrument, insbesondere eine Wasserwaage, mit einem Waagekörper, der mindestens eine Libelle aufweist, die in mindestens einem Libellenkörper des Waagekörpers festlegbar ist und wobei mindestens ein Beleuchtungsmittel zur Beleuchtung der mindestens einen Libelle vorgesehen ist.

Nivellierinstrumente, insbesondere Wasserwaagen, gehören bei vielen Handwerksberufen, beispielsweise Maurern, Fliesenlegern o.dgl., zu unverzichtbaren Hilfsmitteln bei deren täglicher Arbeit. Bei handwerklichen Arbeiten in dunklen Ecken und Räumen reicht oft das Umgebungslicht nicht aus, die Gasblase in der Libelle einer Wasserwaage klar erkennen zu können. Der Handwerker ist dann gezwungen, die Libelle anzuleuchten, um die Lage der Gasblase in Bezug zu den Libellenmarkierungen erkennen zu können. Das ist umständlich und zeitraubend. Um diesem Problem abzuhelfen, sind Wasserwaagen bekannt, deren Libellen beleuchtet sind.

Aufgabe der Erfindung ist es, ein Nivellierinstrument, insbesondere eine Wasserwaage, zu schaffen, die robust ist, kostengünstig herstellbar ist und bei der die Beleuchtung der Libellen optimiert ist.

Diese Aufgabe wird durch die Merkmale des Anspruches 1 gelöst. Bevorzugte Ausführungen des erfindungsgemäßen Nivellierinstrumentes ergeben sich aus den abhängigen Ansprüchen 2 bis 10. Der Wortlaut sämtlicher Ansprüche wird hiermit durch Bezugnahme zum Inhalt dieser Beschreibung gemacht.

Die Erfindung schlägt also vor, den Libellenkörper mit mindestens einer Ausnehmung zur Aufnahme mindestens eines Beleuchtungsmittels auszubilden. Die Ausnehmung ist dabei im wesentlichen unmittelbar an der Libelle angeordnet, wodurch die Libelle durch das vom Beleuchtungsmittel abgestrahlte Licht durchleuchtbar ist.

Als Waagekörper im Sinne der Anmeldung werden Waagebalken o.dgl. verstanden, die mindestens eine plane Auflagefläche aufweisen. Häufig werden Rechteck-Rohre aus verschiedenen Materialien, beispielsweise Aluminium, als Waagekörper verwendet. Als Libellenkörper im Sinne der Anmeldung werden durchsichtige Körper verstanden, die die Libelle aufnehmen, beispielsweise ein Block mit quadratischem oder rundem Querschnitt aus durchsichtigem Material, in dem die Libelle integriert ist. Als Beleuchtungsmittel werden alle lichtabstrahlenden Körper, wie Glühbirnen, Glimmlämpchen o.dgl. verstanden. Bevorzugt besitzt der Waagekörper zwei Libellen. Es können aber auch drei oder mehr sein. Alle Libellen können durch ein Beleuchtungsmittel ausgeleuchtet werden. Es ist auch möglich eine Libelle durch zwei oder mehrere Beleuchtungsmittel anzuleuchten. Vorzugsweise ist jedoch jeder Libelle ein Beleuchtungsmittel zugeordnet.

Das erfindungsgemäße Nivellierinstrument zeichnet sich dadurch aus, daß die Libellen im Vergleich zu herkömmlichen Wasserwaagen wesentlich besser beleuchtet sind. Während bei herkömmlichen beleuchteten Wasserwaagen die Libellen durch relativ weit von der Libelle angeordnete Beleuchtungsmittel angestrahlt werden, werden beim erfindungsgemäßen Nivellierinstrument die Libellen regelrecht durchleuchtet. Dies wird dadurch erreicht, daß die Beleuchtungsmittel direkt in Kontakt mit dem Libellenkörper oder in kurzem Abstand dazu angeordnet sind. Dadurch geht wenig Licht durch Streuung verloren. Oft werden Nivellierinstrumente beim Einsatz starken Erschütterungen, wie Schlägen o.dgl. ausgesetzt. Dadurch kann sich die Lage des Beleuchtungsmittels in Bezug auf die Libelle verändern, beispielsweise kann das Beleuchtungsmittel verschoben werden, so daß die Libelle nicht mehr angeleuchtet wird. Bei einer Ausführungsform des erfindungsgemäßen Nivellierinstruments wird diesem Problem dahingehend begegnet, daß das Beleuchtungsmittel in der Ausnehmung des Libellenkörpers angeordnet ist. Beim erfindungsgemäßen Nivellierinstrument wird durch den kurzen Abstand zwischen dem Beleuchtungsmittel und der Libelle, insbesondere durch die Anordnung des Beleuchtungsmittels unmittelbar am und vorzugsweise mindestens teilweise im Libellenkörper eine wirksame Ausleuchtung der Libelle bzw. der fluoreszierenden Libellenflüssigkeit und der Phasengrenze zur Gasblase erreicht.

Bei einer Weiterbildung der Erfindung ist das Beleuchtungsmittel derart angeordnet, daß die Libelle axial durchleuchtet wird. Das Beleuchtungsmittel ist dabei vorzugsweise in einer axialen Libellenachse angeordnet. Durch diese insbesondere fluchtende Anordnung zwischen Beleuchtungsmittel und Libelle wird eine optimale Durchleuchtung der Libelle gewährleistet. Dies erhöht die Ablesbarkeit des Nivellierinstrumentes, also der Lage der Gasblase in Bezug auf die Libellenmarkierungen.

Die Libelle kann ein Röhrchen aus Glas oder ähnlichen durchsichtigen Materialien sein, das mit Flüssigkeit und einer Gasblase gefüllt ist. Bevorzugt wird die Libelle jedoch von einem Hohlraum im Libellenkörper gebildet. Der Hohlraum kann ein Loch, insbesondere ein Sackloch, im Libellenkörper sein. Bevorzugt ist der Längsschnitt des Hohlraumes tonnenförmig. Der Libellenkörper wird vorzugsweise von einem durchsichtigen Werkstoff gebildet. Als Werkstoff kann Glas eingesetzt werden, jedoch werden wegen dessen Zerbrechlichkeit Plexiglas oder andere transparente Kunststoffe bevorzugt. Der Libellenkörper ist in bekannter Weise mit einer Flüssigkeit und mit einer Gasblase gefüllt. Als Flüssigkeit wird bevorzugt Wasser verwendet. Bevorzugt wird die Flüssigkeit in der Libelle mit fluoreszierenden Zusätzen versehen, um einen Leuchteffekt der Libelle zu erreichen und dadurch die Ablesbarkeit der Wasserwaage zu erhöhen. Als Medium für die Gasblase wird vorzugsweise Luft eingesetzt. Besonders bevorzugt ist ein axiales Ende des Hohlraumes, insbesondere das dem Beleuchtungsmittel zugewandte Ende, durch eine Füllung verschlossen. Dabei schließt die Füllung das axiale Ende bevorzugt eben ab. Als Füllung kann ein Abdeckplättchen und/oder eine Füllmasse o.dgl. eingesetzt werden. Vorzugsweise wird ein Abdeckplättchen und eine Füllung verwendet. Dabei kann das Abdeckplättchen eine ebene Stirnseite der Libelle bilden, an die sich die Füllung anschließt. Als Füllmasse können Kunststoffe o.dgl. verwendet werden. Beispielsweise kann die Füllung durch einen Plexiglas-Einsatz gebildet werden.

Bei einer Weiterbildung der Erfindung ist die Ausnehmung zur Aufnahme des Beleuchtungsmittels in der Füllung ausgebildet. Die Ausnehmung kann dadurch gebildet werden, daß die Füllung in den Libellenkörper, insbesondere in den nach Einsetzen des Abdeckplättchens verbliebenen Teil des Hohlraums des Libellenkörpers, gebracht wird und danach nachbearbeitet wird, beispielsweise ausgebohrt wird. Vorzugsweise ist die Füllung jedoch ein Einsatz, in den die Ausnehmung bereits vor dem Einführen in den Hohlraum eingebracht wurde. Das Beleuchtungsmittel kann im Bereich der Ausnehmung angeordnet sein. Vorzugsweise wird es jedoch innerhalb der Ausnehmung angeordnet. Die Ausnehmung kann jede beliebige Form haben, vorzugsweise ist sie jedoch napfförmig ausgebildet.

Die Ausnehmung in der Füllung kann einen Durchmesser aufweisen, der geringer ist als der Durchmesser der Libelle. Beispielsweise beträgt das Verhältnis des Durchmesser der Ausnehmung zum Durchmesser der Libelle ca. 1/4 bis 2/3. Das Beleuchtungsmittel, insbesondere ein Glühbirnchen, kann dann im Durchmesser noch kleiner sein. Die Ausnehmung kann eine plane Grundfläche aufweisen, so daß das Licht, das vom Beleuchtungsmittel abgestrahlt wird durch die plane Grundfläche der Ausnehmung und das plane Abdeckplättchen hindurch in die Libelle eintritt. Es ist aber auch möglich, daß die Ausnehmung eine gekrümmte, insbesondere eine konkave Grundfläche aufweist. Die konkave Grundfläche wirkt als eine Art Streulinse, die das Licht, das durch diese Grundfläche tritt, auf den gesamten Querschnitt der Libelle streut. Somit wird eine optimale Durchleuchtung der Libelle gewährleistet.

Bei einer Weiterbildung der Erfindung kann der Waagekörper einen Einsatz besitzen. Der Einsatz kann beispielsweise ein Endabschluß eines Endes des Waagekörpers sein, der als Stoßschutz aus Kunststoff oder ähnlichen Materialien ausgebildet sein kann. In diesen Einsatz kann ein Schalter zum Ein- und Ausschalten des Beleuchtungsmittels und der Zugang zur Stromversorgung des Beleuchtungsmittels integriert sein. Als Schalter können alle erdenklichen Vorrichtungen zum Ein- und Ausschalten, beispielsweise ein Kippschalter, ein Schwerkraftschalter o.dgl. eingesetzt werden. Die Stromversorgung des Beleuchtungsmittels kann durch alle erdenklichen Stromquellen erfolgen. Bevorzugt sind jedoch netzunabhängige Stromquellen, wie beispielsweise Batterien, Akkumulatoren o.dgl.. Auch der Einsatz von Solarzellen ist möglich. Jedoch müssen diese mit einer geeigneten Energiespeichervorrichtung gekoppelt sein, um auch bei schlechten Lichtverhältnissen Energie zur Verfügung zu haben. Zur Verhinderung eines unbeabsichtigten Ein- und Ausschaltens des Beleuchtungsmittels kann der Schalter in einer Vertiefung des Einsatzes angebracht sein.

Wie bisher beschrieben zeichnet sich das erfindungsgemäße Nivellierinstrument dadurch aus, daß zur optimalen Durchleuchtung der mindestens einen Libelle des Nivellierinstrumentes Beleuchtungsmittel, insbesondere Glühbirnen, axial fluchtend zu den Libellen angeordnet sind, so daß die Libelle axial durchstrahlt wird. Die Beleuchtungsmittel können in einer Ausnehmung des Libellenkörpers angebracht sein, die als eine Art Führung wirkt und die Beleuchtungsmittel auch bei Erschütterungen in ihrer fluchtenden Ausrichtung zur Libelle hält.

Die beschriebenen Merkmale und weitere Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich allein oder zu mehreren in Kombination miteinander verwirklicht sein.

### Figurenbeschreibung

Ein Ausführungsbeispiel der Erfindung ist in den Zeichnungen dargestellt und wird im folgenden näher erläutert. In den Zeichnungen zeigen:
Figur 1: eine perspektivische, teilweise geschnittene Ansicht der Wasserwaage und
Figur 2: eine vergrößerte Darstellung der Einzelheit x von Figur 1.

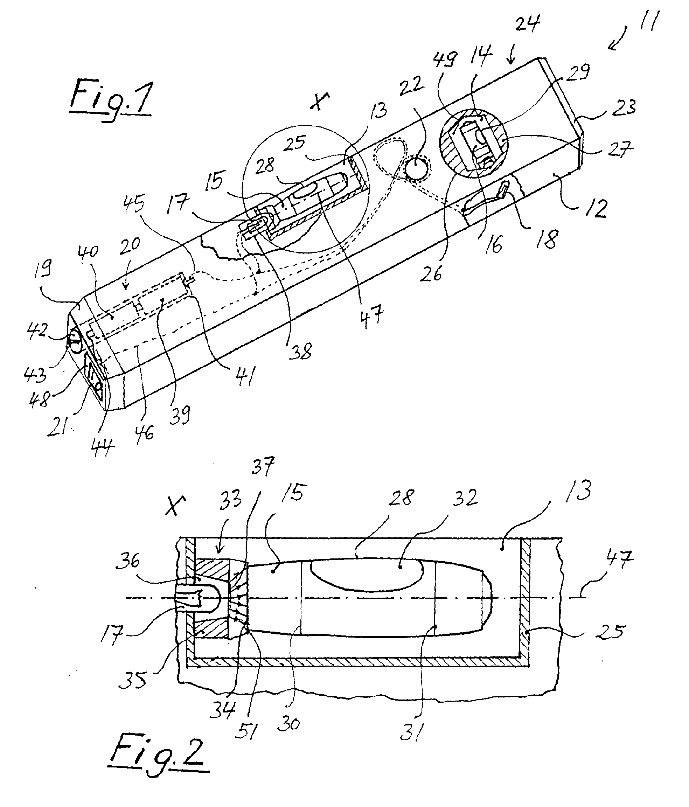

Figur 1 zeigt eine Wasserwaage 11. Sie besteht aus einem Waagekörper 12, zwei Libellenkörpem 13, 14 mit jeweils einer Libelle 15, 16, zwei Beleuchtungsmitteln 17, 18 mit dazugehöriger Kabelführung und einem Einsatz 19, in dem der Zugang zur Stromversorgung 20 und ein Schalter 21 zum Ein- und Ausschalten der Beleuchtungsmittel integriert ist.

Der Waagekörper 12 ist ein Waagebalken in Form eines Rechteck-Rohres. Der Waagekörper 12 ist aus Aluminium. Er ist ca. 40 cm lang und besitzt auf ca. 1/4 dieser Länge ein Loch 22, das zum Aufhängen der Wasserwaage 11, beispielsweise in einem Werkzeugschrank, dient. Das Loch 22 besitzt einen hülsenförmigen Kunststoff-Einsatz (nicht dargestellt). Die Enden des Alu-Rechteck-Waagekörpers 12 sind durch zwei pyramidenstumpfförmige Einsätze 19, 23 verschlossen. Die Einsätze 19, 23 dienen als Stoßschutz. In den Einsatz 19, der weiter von dem Loch 22 entfernt liegt, ist der Zugang zur Stromversorgung 20 und der Schalter 21 zum Ein- und Ausschalten der Beleuchtungsmittel 17, 18 integriert. In den Waagekörper 12 sind ferner zwei Libellenkörper 13, 14 mit jeweils einer Libelle 15, 16 integriert.

Die Libellenkörper 13, 14 sind Plexiglas-Blöcke, in denen die Libellen 15, 16 aufgenommen sind. Ein erster Libellenkörper 13 ist an der schmalen Rückenseite 24 des Waagekörpers 12 mittig zu dessen beiden Enden eingelassen. Dabei ist der Libellenkörper 13 in einer Art Fassung 25 aus Kunststoff aufgenommen, die am Waagekörper 12 befestigt, insbesondere mit dem Waagekörper 12 verklebt ist. Ein zweiter Libellenkörper 14 ist in einem durchgehenden kreisrunden Loch 26 festgelegt. Auch hier dient eine Kunststoff-Fassung 27 zur Aufnahme des Libellenkörpers 14. Die Fassung 27 ist ebenfalls mit dem Waagekörper 12 verklebt. Aus der Fassung 27 ist ein wabenartiges Sichtfenster 49 herausgeschnitten, durch das die Libelle 16 im Libellenkörper 14 sichtbar wird. Die Fassung ist vorzugsweise einstückig mit der Hülse des Loches 22 und dem Endeinsatz 23 ausgebildet.

Die Libellen 15, 16 haben eine tonnenartige Form und werden durch Hohlräume 28, 29 in Form von Sacklöchern in den Libellenkörpern 13, 14 gebildet. Die Libellen 15, 16 sind mit Wasser gefüllt, das mit einer fluoreszierenden Substanz versetzt ist. Sie besitzen zwei Libellenmarkierungen 30, 31. Ferner besitzen sie jeweils eine Luftblase 32, deren Lage zwischen den Libellenmarkierungen zum Nivellieren dient. Die Hohlräume 28, 29 besitzen einen ausgefüllten ersten Abschnitt 33, der einen gegenüber dem Rest des Sackloches erweiterten Querschnitt hat. Am Übergang zwischen dem ersten Abschnitt 33 und dem restlichen mit Flüssigkeit gefüllten Sackloch befindet sich ein Abdeckplättchen 34, das die Libelle verschließt. Das Abdeckplättchen 34 hat eine plane Oberfläche. In den ersten Abschnitt 33 ist, wie in Figur 2 dargestellt, eine Füllung 35 eingesetzt. Als Füllmaterial kann Plexiglas oder ein durchsichtiger Zweikomponentenkunststoff eingesetzt werden. Die Füllung 35 besitzt eine Ausnehmung 36 in Form eines Loches. Die Ausnehmung 36 hat eine konische Form und verjüngt sich in Richtung der Libelle 15, 16. Sie besitzt eine konkave Grundfläche 37. Die konkave Grundfläche 37 bewirkt, daß die Lichtstrahlen 51, die durch diese Fläche treten, auf den gesamten Querschnitt der Libelle 15, 16 gestreut werden.

Im Bereich der Ausnehmung 36, insbesondere in der Ausnehmung 36, befinden sich Beleuchtungsmittel 17, 18 in Form von Glühbirnchen. Die Ausnehmung 36 ist so gestaltet, daß das Beleuchtungsmittel 17, 18 fluchtend zur Libelle 17, 18 axial entlang der Libellenachse 47 ausgerichtet ist. Die Beleuchtungsmittel 17, 18 sind Glühbirnen mit einer relativ geringen Leistung von ca. 1 Watt. Dadurch wird verhindert, daß sich die Glühbirnen schnell erwärmen. Somit wird ein Dauereinsatz über mehrere Stunden gewährleistet. Das Beleuchtungsmittel 17, das dem Libellenkörper 13 an der schmalen Rückenseite 24 des Waagekörpers 12 zugeordnet ist, befindet sich in einer Führung 38, die zur Fixierung des Beleuchtungsmittels 17 im Bereich der Ausnehmung 36 dient. Die Führung 38 ist aus Kunststoff. Das Beleuchtungsmittel 18 hingegen, das dem Libellenkörper 14 an dem kreisrunden Loch zugeordnet ist, wird mit einem Gummi- oder Klebeband (nicht dargestellt) an der Fassung 27 des kreisrunden Loches 26 fixiert. Die Beleuchtungsmittel 17, 18 sind mit einer Stromversorgung 20 und einem Schalter 21 verkabelt.

Die Stromversorgung 20 leisten zwei Batterien 39, 40, die sich in einem Batteriegehäuse 41 befinden. Das Batteriegehäuse 41 ist über den Einsatz 19 zugänglich und mit diesem verbunden. Das Batteriegehäuse 41 wird mit einem Schraudeckel 42 mit Drehschlitz 43 verschlossen. Die Beleuchtungsmittel 17, 18 sind jeweils mit den Batterien und mit dem Schalter 21 verbunden, so daß in Kontaktstellung des Schalters 21 ein geschlossener Stromkreis entsteht. Die beiden Beleuchtungsmittel 17, 18 sind parallel geschaltet. Dabei ist ein Batteriekabel 45 mit jeweils einem Kabel der Beleuchtungsmittel 17, 18 verbunden. Während das jeweilige andere Kabel der Beleuchtungsmittel 17, 18 mit einem Schalterkabel 46 verbunden ist. Ferner führt ein Kontaktkabel von den Batterien 39, 40 zum Schalter 21. Wird also der Schalter 21 auf EinStellung gedrückt, wird der Kontakt hergestellt und die beiden Beleuchtungsmittel 17, 18 beginnen zu leuchten. Um eine Kabelbewegung im Waagekörper 12 zu verhindern, wird ein Fixierelement (nicht dargestellt) in Form eines Styropor-Blockes eingesetzt, das die Kabel an der Innenwandung des Waagekörpers 12 fixiert.

Zur Montage des Libellenkörpers 14 in dem durchgehenden kreisrunden Loch 26, bilden die Fassung 27, die Hülse im Loch 22 sowie der Endeinsatz 23 eine Montageeinheit. Die Kabel des Beleuchtungsmittels 18 sind dabei um den Einsatz im Loch 22 gewickelt. Ferner wird so viel Kabel zugegeben, daß die Montageeinheit mit vormontierten Kabeln und Beleuchtungsmitteln in den Waagekörper einsetzbar ist.

Zur Herstellung der Libellen 15, 16 wird zunächst ein Sackloch in dem Libellenkörper 13, 14 gebildet. Dabei wird der erste Abschnitt 33 mit einem im Vergleich zum restlichen Sackloch größeren Bohrdurchmesser ausgebildet. Danach wird Wasser mit einem fluoreszierendem Zusatz in den Hohlraum 28, 29 gefüllt und der Hohlraum 28, 29 mit einem Abdeckplättchen 34 so verschlossen, daß sich eine Luftblase 32 bildet. Als nächstes wird die Füllung 35, in die die Ausnehmung 36 schon eingebracht ist, in den ersten Abschnitt 33 des Hohlraumes 28, 29 eingefügt. Sodann kann mit Anbringung der Beleuchtungsmittel 17, 18 und mit deren Verkabelung begonnen werden.
Es ist auch möglich das Beleuchtungsmittel in die Masse der Füllung einzubetten. Dadurch kann das Beleuchtungsmittel gleichzeitig im Libellenkörper befestigt werden.

## Patentansprüche

1. Nivellierinstrument, insbesondere Wasserwaage, mit einem Waagekörper (12), der mindestens eine Libelle (15, 16) aufweist, die in mindestens einem Libellenkörper (13, 14) des Waagekörpers (12) festgelegt ist, wobei mindestens ein Beleuchtungsmittel (17, 18) zur Beleuchtung der mindestens einen Libelle (15, 16) vorgesehen ist und der Libellenkörper (13, 14) mindestens eine Ausnehmung (36) zum Einfangen des von einem Beleuchtungsmittel (17, 18) abgestrahlbaren Lichts aufweist, die im wesentlichen unmittelbar an der Libelle (15, 16) angeordnet ist und wodurch die Libelle (15, 16) durch das vom Beleuchtungsmittel (17, 18) abgestrahlte Licht durchleuchtbar ist.

2. Nivellierinstrument nach Anspruch 1, **dadurch gekennzeichnet, daß** die Ausnehmung axial zur Libelle angeordnet ist und die Libelle (15, 16) axial, insbesondere von dem entlang einer axialen Libellenachse (47) angeordneten Beleuchtungsmittel (17, 18), durchleuchtbar ist.

3. Nivellierinstrument nach Anspruch 1 oder 2, dadurch gekennezeichnet, daß die Libelle (15, 16) von einem insbesondere tonnenförmigen Hohlraum (28, 29) im Libellenkörper (13, 14) aus einem durchsichtigen Werkstoff gebildet ist, der mit Flüssigkeit und einer Gasblase (32) gefüllt ist, wobei ein axiales Endes des Hohlraums (28, 29) durch eine durchsichtige Füllung (35) verschlossen ist, wobei insbesondere die Ausnehmung (36) in der Füllung (35) ausgebildet ist.

4. Nivellierinstrument nach Anspruch 3, **dadurch gekennzeichnet, daß** die Füllung (35) das axiale Ende des Hohlraumes (28, 29) eben abschließt.

5. Nivellierinstrument nach einem der vorhergehenden Ansprüche, **dadurch gekennzeichnet, daß** das Beleuchtungsmittel (17, 18) im Bereich der Ausnehmung (36), insbesondere in der Ausnehmung (36) angeordnet ist.

6. Nivellierinstrument nach Anspruch 5, **dadurch gekennzeichnet, daß** die Ausnehmung (36) in der Füllung (35) einen Durchmesser aufweist, der geringer ist als der Durchmesser der Libelle (15, 16).

7. Nivellierinstrument nach Anspruch 5 oder 6, **dadurch gekennzeichnet, daß** die Ausnehmung (36) eine plane Grundfläche aufweist.

8. Nivellierinstrument nach Anspruch 5 oder 6, **dadurch gekennzeichnet, daß** die Ausnehmung (36) eine konkave Grundfläche (37) aufweist.

9. Nivellierinstrument nach einem der vorhergehenden Ansprüche, **dadurch gekennzeichnet, daß** der Waagekörper (12) mindestens einen abnehmbaren Einsatz (19, 23), insbesondere einen Endabschluß eines Ende des Waagekörpers (12), aufweist, in den ein Schalter (21) zum Einund Ausschalten des Beleuchtungsmittels (17, 18) und der Zugang zur Stromversorgung (20) des Beleuchtungsmittels (17, 18) integriert ist.

10. Nivellierinstrument nach einem der vorhergehenden Ansprüche, **dadurch gekennzeichnet, daß** der Schalter (21) zur Verhinderung eines unbeabsichtigten Ein- und Ausschaltens des Beleuchtungsmittels (17, 18) in einer Vertiefung (48) des Einsatzes (19) angebracht ist.
